# EUROPÄISCHE PATENTSCHRIFT

(11) **EP 2 384 935 B1**
(45) Veröffentlichungstag und Bekanntmachung des Hinweises auf die Patenterteilung: **24.08.2016**
(21) Anmeldenummer: 11161656.1
(22) Anmeldetag: 08.04.2011
(51) Int. Cl.: B60Q 1/30, B60Q 11/00, H05B 33/08, B60R 16/03

(54) **Verfahren zum Schalten einer Fahrzeugbeleuchtung**
Method for switching a vehicle lighting system
Procédé de commutation d'un éclairage de véhicule

(30) Priorität: 05.05.2010 DE 102010016804
(43) Veröffentlichungstag der Anmeldung: 09.11.2011
(73) Patentinhaber: BPW Bergische Achsen KG, 51674 Wiehl (DE)
(72) Erfinder: Schneider, Peter, 51597, Morsbach (DE); Kottmann, Ralf, 51491, Overath (DE)
(74) Vertreter: Christophersen, Ulrich Rudolf

(56) Entgegenhaltungen:
- EP-A1- 0 430 792
- EP-A2- 0 504 549
- EP-A2- 0 773 139
- DE-A1- 10 127 056
- DE-A1- 10 236 301
- DE-U1-202005 017 151

## Beschreibung

Die Erfindung betrifft ein Verfahren zum Schalten einer Fahrzeugbeleuchtung, mit einer Lichtsteuereinheit mit Signaleingängen für auf dem Niveau der Fahrzeug-Versorgungsspannung liegende, fahrerseitige Schaltsignale und einem weiteren Eingang für die Fahrzeug-Versorgungsspannung, mit einem Signalausgang, welcher Teil einer bidirektionalen Daten-BUS-Verbindung zu den Fahrzeugleuchten ist, und mit einer vorzugsweise in die Lichtsteuereinheit implementierten Testroutine zur Überprüfung der Signalverarbeitung in der Lichtsteuereinheit, wobei die Spannung an dem weiteren Eingang überwacht wird und die Testroutine mit erstmaligem Anliegen einer allgemeinen Fahrzeug-Versorgungsspannung an dem weiteren Eingang startet.

Auf dem Fahrzeugsektor werden zunehmend LED-Signalleuchten eingesetzt, da diese neben verbesserten lichttechnischen Eigenschaften eine höhere Standzeit im Vergleich zu konventionellen Glühbirnen haben. Die Ansteuerung von LED-Leuchten erfolgt häufig nicht konventionell, d. h. unmittelbar durch Schließen eines vom Fahrer kommenden Stromkreises, sondern indirekt über eine Lichtsteuereinheit. Das vom Fahrer kommende Schaltsignal gelangt zunächst, ebenso wie etwaige andere Schaltsignale, zu der Lichtsteuereinheit, in der in Abhängigkeit vom jeweiligen Schaltsignal ein Steuersignal für die betreffende Leuchteneinheit in Gang gesetzt wird. Häufig erfolgt diese weitere Signalübertragung über einen Daten-BUS in Form eines der Betriebsspannung des Fahrzeuges überlagerten Signals. Die Betriebsspannung beträgt bei Nutzfahrzeugen in der Regel 24 Volt.

Für BUS-gesteuerte Beleuchtungssysteme, wie sie z. B. aus der EP 0 773 139 A2 bekannt sind, und zu denen auch die Brems- und Blinkleuchten eines aus Zugfahrzeug und Anhängerfahrzeug bestehenden Fahrzeugverbandes zählen, besteht seitens des Gesetzgebers die Forderung, dass diese innerhalb einer vorgegebenen Schwellzeit ihre Soll-Lichtstärke erreichen. Elektronische Lichtsteuerungen unter Einsatz eines BUS-Systems verursachen jedoch Totzeiten für den Kommunikationsaufbau. Besteht keine permanente Stromversorgung, ist auch für die Initialisierung der Elektronik eine gewisse Zeitspanne erforderlich.

Zur Vermeidung solcher Verzögerungen arbeiten BUS-gesteuerte Fahrzeugbeleuchtungsanlagen für einen ordnungsgemäßen Betrieb mit einer permanenten Stromversorgung der signalverarbeitenden Einheiten, und insbesondere der elektronischen Lichtsteuereinheit.

Der Erfindung liegt die **Aufgabe** zugrunde, den ordnungsgemäßen Betrieb einer BUSgesteuerten Beleuchtungsanlage eines Kraftfahrzeuges und vorzugsweise eines Verbandes aus Zug- und Anhängerfahrzeug sicherzustellen, ohne eine permanente Versorgung der signaltechnischen Einheiten und insbesondere der Lichtsteuereinheit mit der Fahrzeug-Betriebsspannung zu benötigen.

Zur **Lösung** dieser Aufgabe wird bei einem Verfahren mit den eingangs angegebenen Merkmalen vorgeschlagen, dass das Starten der Testroutine dann unterbleibt, wenn an einem der Signaleingänge ein fahrerseitiges Schaltsignal vorliegt. Alternativ wird bei noch nicht beendeter Testroutine diese abgebrochen, sobald an einem der Signaleingänge ein fahrerseitiges Schaltsignal vorliegt.

Im Falle einer noch nicht oder nicht vollständig aufgebauten Dauerstromversorgung und bei gleichzeitigem Vorliegen eines fahrerseitigen Schaltsignals an der Lichtsteuereinheit wird die eigentlich anstehende Testroutine temporär übersprungen oder jedenfalls zeitlich zunächst zurückgestellt, und so die verzögerungsfreie Ausführung des vom Fahrer geschalteten Lichtsignals mit Priorität behandelt. Alternativ wird, sofern die Testroutine bereits begonnen hat und noch nicht abgeschlossen ist, diese abgebrochen oder unterbrochen, sobald an einem der Signaleingänge der Lichtsteuereinheit ein fahrerseitiges Schaltsignal vorliegt. Wiederum wird dieses Schaltsignal mit Priorität behandelt und so der Lichtbefehl sofort und ohne zeitliche Verzögerung ausgeführt.

Das zu der Lichtsteuereinheit gelangende, auf dem Niveau der Fahrzeug-Versorgungsspannung bzw. Betriebsspannung liegende Schaltsignal wird, sofern die permanente Fahrzeug-Versorgungsspannung (Dauerplus-Versorgung) noch nicht oder nicht vollständig aufgebaut ist, als Versorgungsspannung für die Lichtsteuereinheit verwendet, und dient zusätzlich der Energieversorgung auch des BUS-Systems. Die Signalspannung des durch den Fahrer geschalteten Stromkreises (z. B. der Schaltkreis für das Bremslicht) dient daher bei Fehlen der allgemeinen Fahrzeug-Versorgungsspannung (Dauerplus-Versorgung) zeitgleich als Energielieferant für sowohl elektronische Steuerkomponenten, als auch für den Betrieb des jeweiligen Leuchtmittels, z. B. einer LED-Leuchteneinheit.

Das Verfahren eignet sich daher universell zum Einsatz in Fahrzeugen mit, als auch in Fahrzeugen ohne Dauerplus-Versorgung, und erfüllt die gesetzlichen Anforderungen an die Bereitschaft der wichtigsten Fahrzeugleuchten mit einem Zeitraum zwischen Signalauslösung seitens des Fahrers und dem Erreichen der Soll-Lichtstärke von unter 100 Millisekunden.

Weitere Vorteile und Einzelheiten ergeben sich auch aus der nachfolgenden Beschreibung, in der auf die zugehörige Zeichnung Bezug genommen wird. Diese zeigt in stark schematischer Darstellung das fahrzeugelektrische Layout eines aus einem Zugfahrzeug und einem Anhängerfahrzeug bestehenden Fahrzeugverbandes.

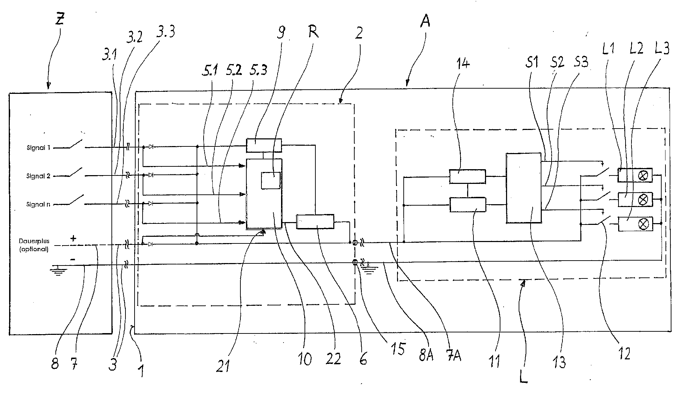

Auf der Zeichnung ist schematisch ein Nutzfahrzeug wiedergegeben, welches sich aus einem - angetriebenen - Zugfahrzeug Z und einem - gezogenen - Fahrzeuganhänger A, zum Beispiel einem Sattelauflieger zusammensetzt Die elektrische Verbindung hinsichtlich Betriebsspannung und Signalspannung zwischen Anhängerfahrzeug A und Zugfahrzeug Z erfolgt über flexibel verlegte Anschlusskabel 3, 3.1, 3.2, 3.3. Nahe der vorderen Bordwand 1 des Anhängerfahrzeuges A ist eine elektrische Anschlussbox 2 befestigt. Diese enthält, dem Zugfahrzeug Z zugewandt, die einzelnen Steckanschlüsse für die elektrische Verbindung mit dem Zugfahrzeug.

Am anderen, d. h. rückwärtigen Ende des Fahrzeuganhängers A befindet sich in üblicher Weise eine linke und eine rechte Rückleuchte des Beleuchtungssystems des Anhängerfahrzeugs. Die Rückleuchten sind jeweils zu Rückleuchteneinheiten L zusammengefasst und führen üblicherweise die Lichtfunktionen einer Bremsleuchte L1, einer jeweiligen Blinkerleuchte L2, des Rücklichts L3 und ggf. eines Rückfahrlichts, einer Nebelschlussleuchte oder der Kennzeichenbeleuchtung aus. Auf der Zeichnung ist nur eine der zwei vorhandenen Rückleuchteneinheiten L dargestellt.

Die einzelnen Rückleuchten L1, L2, L3 etc. können statt mit herkömmlichen Glühbirnen mit Leuchtdioden (LED) und entsprechenden Vorschaltwiderständen für die Leuchtdioden bestückt sein. Die Leuchtdioden sind üblicherweise nach Art einer Matrix geschaltet, bestehend aus parallelen LED-Reihen, die ihrerseits aus mehreren LED bestehen.

Jede Rückleuchteneinheit L nimmt ferner eine BUS-Signalanbindung 11 sowie eine Lichtsteuereinheit 13 eines die Rückleuchteneinheit L mit elektrischer Spannung sowie mit den Ein- und Ausschaltsignalen für die einzelnen Lichtfunktionen versorgenden DC-BUS-Systems auf. Zur Versorgung der rückleuchtenseitigen BUS-Signalanbindung 11 und Steuereinrichtung 13 mit der erforderlichen Betriebsspannung dient ein Netzteil 14. Dieses wird über die Leitungen 7A, 8A des Bordnetzes des Fahrzeugs gespeist. Das Bordnetz wird bei Nutzfahrzeugen üblicherweise mit 24 Volt Gleichspannung betrieben.

Die Anschlussbox 2 nimmt eine mit einem Prozessor (CPU) versehene zentrale Lichtsteuereinheit (ECU) 10 des Fahrzeuganhängers auf sowie, signaltechnisch nachgeschaltet, eine BUS-Signalanbindung 6. Die zentrale Lichtsteuereinheit 10 kann über weitere Signalleitungen mit verschiedenen anderen Steuerkomponenten der Fahrzeugelektrik verknüpft sein, insbesondere mit einem innerhalb oder auch außerhalb der Anschlussbox angeordneten, elektronischen Bremsensteuergerät für die Bremsen des Fahrzeuganhängers. Zur Versorgung der BUS-Signalanbindung 6 und des Prozessors der zentralen Lichtsteuereinheit 10 mit ausreichender Betriebsspannung dient ein Netzteil 9. Das Netzteil 9 wird über die vom Zugfahrzeug kommenden Leitungen 7, 8 gespeist. Der Anhänger selbst verfügt über keine eigene Betriebsspannungsquelle.

Der Signalausgang 22 der zentralen Lichtsteuereinheit 10 steht über die BUS-Signalanbindung 6 und eine als bidirektionaler DC-BUS 7A arbeitende Leitung mit positivem Potential sowie über den das negative Potential aufweisenden Masseleiter 8A mit den Lichtsteuerkomponenten der Rückleuchteneinheit L in Verbindung. Als Massepotential 8, 8A kann auch das aus Metall bestehende Fahrzeugchassis dienen.

Die Leitungsstränge 7A, 8A des DC-BUS-Systems arbeiten mit der Gleichspannung des Bordnetzes, hier also der Gleichspannung des 24-Volt-Bordnetzes 7, 8 des Zugfahrzeuges, wobei dieser Spannung zur Übertragung von Informationen BUS-Signale aufmoduliert sind. Der DC-BUS 7A ist zum Aufmodulieren bzw. Auslesen der BUS-Signale auf Seiten der zentralen Lichtsteuereinheit 10 mit der BUS-Signalanbindung 6, und auf Seiten jeder Rückleuchteneinheit L mit der dortigen, weiteren BUS-Signalanbindung 11 verbunden. Bei den Signalanbindungen 6 und 11 handelt es sich jeweils um Transceiver, sie bestehen also aus einem Sende- und einem Empfangsmodul. An der Anschlussbox 2 erfolgen die Kontaktierungen der längs des Anhängerfahrzeuges geführten BUS-Leitungsstränge 7A, 8A an die Signalanbindung 6 vorzugsweise über entsprechende Steckkontakte 15.

Wird im Zugfahrzeug Z seitens des Fahrers z. B. der Blinkerschalter "rechts" betätigt, so schließt sich ein entsprechender, über das Anschlusskabel 3.2 zum Anhängerfahrzeug geführter Stromkreis. Dies führt zu einem entsprechenden Signaleingang 5.2 an der zentralen Lichtsteuereinheit 10, was durch diese detektiert wird. Die Lichtsteuereinheit 10 initiiert daraufhin über die BUS-Signalanbindung 6 ein der Gleichspannung in der Dauerplus-Leitung 7 aufmoduliertes BUS-Signal zum Einschalten der Blinklichter L2 der rechten Rückleuchte. In der in der rechten Rückleuchteneinheit L angeordneten BUS-Signalanbindung 11 erfolgt die Trennung des in dem Leitungsstrang 7A überlagerten BUS-Signals. An die BUS-Signalanbindung 11 ist, ebenfalls innerhalb der Rückleuchteneinheit L, die rückleuchtenseitige Steuereinrichtung 13 angeschlossen, deren Ausgangssignale Schaltsignale S1, S2, S3 etc. zur Betätigung von Schaltelementen 12 der einzelnen Lichtfunktionen L1, L2, L3 sind. Im hier beschriebenen Beispiel kommt es also am Signalausgang der Steuereinrichtung 13 zu einem Schaltsignal S2 und damit zu einem Ein- bzw. Ausschalten der jeweiligen LEDs des rechten Blinklichts L2.

Programmtechnisch ist in die zentrale Lichtsteuereinheit 10 ein Testprogramm integriert, welches unmittelbar nach jedem Betriebsstart des Fahrzeugs zunächst eine Testroutine R zur Überprüfung aller wichtigen Funktionen der Lichtsteuereinheit durchführt. Die Testroutine R startet selbsttätig mit Einschalten des Bordnetzes, d.h. sobald die Lichtsteuereinheit 10 über den Dauerplus-Eingang 21 das Vorhandensein der Bordnetzspannung von normalerweise 24 Volt in den Leitungssträngen 7, 8 feststellt.

Die Durchführung der Testroutine R nimmt eine gewisse Zeitdauer in Anspruch, während der die reguläre Signalverarbeitung in der Lichtsteuereinheit 10 unterbrochen ist. Die Unterbrechung beträgt zwar weniger als eine Sekunde, jedoch können in diesem Zeitraum an den Signaleingängen 5.1 bis 5.3 eintreffende Brems- oder Blinkersignale vorübergehend nicht zu entsprechenden Steuersignalen des DC-BUS-Systems verarbeitet werden. Andererseits verlangen gesetzliche Bestimmungen, dass die Verzögerung zwischen dem signalauslösenden Ereignis, also z.B. der Betätigung des Bremslichtgebers im Zugfahrzeug Z, und dem Aufleuchten des Bremslichts nicht mehr als 100 Millisekunden betragen darf.

Aus diesem Grunde verhindert die Lichtsteuereinheit 10 das Starten der Testroutine R, wenn und soweit an einem der Signaleingänge 5.1, 5.2, 5.3 ein Schaltsignal vorliegt, ohne dass an dem Signaleingang 21 das Anliegen der Bordnetzspannung feststellbar ist. Alternativ wird, wenn in diesem Fall die Testroutine R zwar gestartet aber noch nicht beendet ist, diese abgebrochen und später neu gestartet. Innerhalb der Lichtsteuereinheit 10 werden daher Signale bei 5.1, 5.2, 5.3 mit Priorität gegenüber dem Starten der Testroutine behandelt. Durch die Testroutine R und für deren Dauer kommt es zu keinen Verzögerungen in der regulären Signalverarbeitung.

Die Anschlussbox 2 kann neben den Steckkontakten 15 des Beleuchtungssystems über eine Verbindung zum Anschluss der Steuereinheit des elektronischen Bremssystems des Fahrzeuganhängers verfügen.

Damit wird die Voraussetzung für eine signaltechnische Verknüpfung der Steuereinheit des elektronischen Bremssystems mit der Lichtsteuereinheit 10 geschaffen. Durch die signaltechnische Verknüpfung der Steuereinheit des elektrischen Bremssystems mit der Lichtsteuereinheit lässt sich ein "intelligentes" Beleuchtungssystem mit vorteilhaften Funktionen wie z.B. Rückfahrsystemen, einem adaptiven (von der Stärke des Bremsvorgangs abhängigen) Bremslicht und dergleichen weitere Funktionen schaffen.

### Bezugszeichen

- 1: Bordwand
- 2: Anschlussbox
- 3: Anschluss zum Zugfahrzeug
- 3.1: Anschluss zum Zugfahrzeug
- 3.2: Anschluss zum Zugfahrzeug
- 3.3: Anschluss zum Zugfahrzeug
- 5.1: Signaleingang
- 5.2: Signaleingang
- 5.3: Signaleingang
- 6: Transceiver, BUS-Signalanbindung
- 7: Plusleiter Bordnetz
- 7A: Daten-BUS
- 8: Masseleiter
- 8A: Masseleiter
- 9: Netzteil
- 10: Lichtsteuereinheit (ECU)
- 11: Transceiver, BUS-Signalanbindung
- 12: Schaltelement
- 13: Steuereinrichtung
- 14: Netzteil
- 15: Steckkontakt
- 21: Signaleingang Bordnetzspannung
- 22: Signalausgang

- A: Anhängerfahrzeug
- L: Rückleuchteneinheit
- L1: Lichtfunktion
- L2: Lichtfunktion
- L3: Lichtfunktion
- R: Testroutine
- S1: Schaltsignal
- S2: Schaltsignal
- S3: Schaltsignal
- Z: Zugfahrzeug

## Patentansprüche

1. Verfahren zum Schalten einer Fahrzeugbeleuchtung, mit einer Lichtsteuereinheit (10) mit Signaleingängen (5.1, 5.2, 5.3) für auf dem Niveau der Fahrzeug-Versorgungsspannung liegende, fahrerseitige Schaltsignale und einem weiteren Eingang (21) für die Fahrzeug-Versorgungsspannung, mit einem Signalausgang, welcher Teil einer bidirektionalen Daten-BUS-Verbindung (7A, 8A) zu den Fahrzeugleuchten (L1, L2, L3) ist, und mit einer vorzugsweise in die Lichtsteuereinheit (10) implementierten Testroutine (R) zur Überprüfung der Signalverarbeitung in der Lichtsteuereinheit (10), wobei die Spannung an dem weiteren Eingang (21) überwacht wird und die Testroutine (R) startet, sobald es nach jedem Betriebsstart des Fahrzeugs mit Einschalten des Bordnetzes zum erstmaligen Anliegen einer allgemeinen Fahrzeug-Versorgungsspannung an dem weiteren Eingang (21) kommt,
**dadurch gekennzeichnet,**
**dass** das Starten der Testroutine (R) dann unterbleibt, wenn an einem der Signaleingänge (5.1, 5.2, 5.3) ein fahrerseitiges Schaltsignal vorliegt.

2. Verfahren zum Schalten einer Fahrzeugbeleuchtung, mit einer Lichtsteuereinheit (10) mit Signaleingängen (5.1, 5.2, 5.3) für auf dem Niveau der Fahrzeug-Versorgungsspannung liegende, fahrerseitige Schaltsignale und einem weiteren Eingang (21) für die Fahrzeug-Versorgungsspannung, mit einem Signalausgang, welcher Teil einer bidirektionalen Daten-BUS-Verbindung (7A, 8A) zu den Fahrzeugleuchten (L1, L2, L3) ist, und mit einer vorzugsweise in die Lichtsteuereinheit (10) implementierten Testroutine (R) zur Überprüfung der Signalverarbeitung in der Lichtsteuereinheit (10), wobei die Spannung an dem weiteren Eingang (21) überwacht wird und die Testroutine (R) startet, sobald es nach jedem Betriebsstart des Fahrzeugs mit Einschalten des Bordnetzes zum erstmaligen Anliegen einer allgemeinen Fahrzeug-Versorgungsspannung an dem weiteren Eingang (21) kommt,
**dadurch gekennzeichnet,**
**dass** bei noch nicht beendeter Testroutine (R) diese abgebrochen wird, sobald an einem der Signaleingänge ein fahrerseitiges Schaltsignal vorliegt.

3. Verfahren zum Schalten einer Fahrzeugbeleuchtung nach Anspruch 1 oder Anspruch 2, **dadurch gekennzeichnet, dass** die Testroutine (R) nach Beenden des fahrerseitigen Schaltsignals gestartet bzw. neu gestartet wird.

## Claims

1. Method for switching a vehicle lighting system having a light control unit (10) with signal inputs (5.1, 5.2, 5.3) for driver-side switching signals at the level of the vehicle supply voltage and with a further input (21) for the vehicle supply voltage, having a signal output which is part of a bidirectional data bus connection (7A, 8A) to the vehicle lights (L1, L2, L3), and having a test routine (R) which is preferably implemented in the light control unit (10) and is intended to check the signal processing in the light control unit (10), the voltage at the further input (21) being monitored and the test routine (R) starting as soon as a general vehicle supply voltage is applied to the further input (21) for the first time after each operational start of the vehicle with switching-on of the vehicle electrical system,
**characterized in that**
the test routine (R) does not start when a driver-side switching signal is present at one of the signal inputs (5.1, 5.2, 5.3).

2. Method for switching a vehicle lighting system having a light control unit (10) with signal inputs (5.1, 5.2, 5.3) for driver-side switching signals at the level of the vehicle supply voltage and with a further input (21) for the vehicle supply voltage, having a signal output which is part of a bidirectional data bus connection (7A, 8A) to the vehicle lights (L1, L2, L3), and having a test routine (R) which is preferably implemented in the light control unit (10) and is intended to check the signal processing in the light control unit (10), the voltage at the further input (21) being monitored and the test routine (R) starting as soon as a general vehicle supply voltage is applied to the further input (21) for the first time after each operational start of the vehicle with switching-on of the vehicle electrical system,
**characterized in that**
if the test routine (R) has not yet been concluded, it is aborted as soon as a driver-side switching signal is present at one of the signal inputs.

3. Method for switching a vehicle lighting system according to Claim 1 or Claim 2, **characterized in that** the test routine (R) is started or restarted after the driver-side switching signal has ended.

## Revendications

1. Procédé destiné à commuter un éclairage de véhicule, avec une unité de commande (10) de la lumière, avec des entrées de signaux (5.1, 5.2, 5.3), pour des signaux de commutation côté conducteur, situés au niveau de la tension d'alimentation du véhicule et une entrée (21) supplémentaire pour la tension d'alimentation du véhicule, avec une sortie de signaux, laquelle est une partie d'une liaison de données par BUS (7A, 8A) vers les optiques du véhicule (L1, L2, L3) et avec une routine de test (R) implémentée de préférence dans l'unité de commande (10) de la lumière, pour la vérification du traitement des signaux dans l'unité de commande (10) de la lumière, la tension sur l'entrée (21) supplémentaire étant supervisée et la routine de test (R) démarrant dès qu'après chaque mise en route du véhicule, avec lancement du réseau de bord, il s'effectue une première application d'une tension d'alimentation générale du véhicule sur l'entrée (21) supplémentaire,
**caractérisé en ce que**
le démarrage de la routine de test (R) ne s'effectue pas si un signal de commutation côté conducteur est présent sur l'une des entrées de signaux (5.1, 5.2, 5.3).

2. Procédé destiné à commuter un éclairage de véhicule, avec une unité de commande (10) de la lumière avec des entrées de signaux (5.1, 5.2, 5.3) pour des signaux de commutation côté véhicule, situés au niveau de la tension d'alimentation du véhicule et une entrée (21) supplémentaire pour la tension d'alimentation du véhicule, avec une sortie de signaux, laquelle est une partie d'une liaison de données par BUS (7A, 8A) vers les optiques du véhicule (L1, L2, L3) et avec une routine de test (R) implémentée de préférence dans l'unité de commande (10) de la lumière, pour la vérification du traitement des signaux dans l'unité de commande (10) de la lumière, la tension sur l'entrée (21) supplémentaire étant supervisée et la routine de test (R) démarrant dès qu'après chaque mise en route du véhicule, avec lancement du réseau de bord, il s'effectue une première application d'une tension d'alimentation générale du véhicule sur l'entrée (21) supplémentaire,
**caractérisé en ce**
**qu'**alors que la routine de test (R) n'est pas encore achevée, celle-ci est interrompue dès qu'un signal de commutation est présent sur l'une des entrées de signaux.

3. Procédé destiné à commuter un éclairage de véhicule selon la revendication 1 ou la revendication 2, **caractérisé en ce que** la routine de test (R) est démarrée ou redémarrée après achèvement du signal de commutation côté conducteur.
